Europäisches Patentamt

European Patent Office

Office européen des brevets

(19)

(11) Publication number: **0 026 954**
**B1**

(12) **EUROPEAN PATENT SPECIFICATION**

(45) Date of publication of patent specification: **06.07.83**

(21) Application number: **80200932.4**

(22) Date of filing: **02.10.80**

(51) Int. Cl.³: **B 29 C 17/03, B 29 D 9/00, B 65 D 1/28, B 32 B 27/08, C 08 J 7/04**

(54) **Composite unstretched thermo-deformable plastics film and deepdrawn container shaped from said plastics film.**

(30) Priority: **05.10.79 NL 7907419**

(43) Date of publication of application:
**15.04.81 Bulletin 81/15**

(45) Publication of the grant of the patent:
**06.07.83 Bulletin 83/27**

(84) Designated Contracting States:
**AT BE CH DE FR GB IT LI LU NL SE**

(56) References cited:
**CH - A - 424 216**
**DE - A - 1 924 744**
**DE - A - 2 018 554**
**FR - A - 1 232 476**
**FR - A - 1 363 700**
**FR - A - 1 427 416**
**FR - A - 1 477 105**
**FR - A - 2 136 429**

(73) Proprietor: **WAVIN B.V.**
**Händellaan 251**
**NL-8031 EM Zwolle (NL)**

(72) Inventor: **Haasbroek, Thomas Jean**
**6 Prins Clauslaan**
**NL-6721 AG Bennekom (NL)**
Inventor: **Nijman, Marinus**
**36 Hofstedestraat**
**NL-7447 HT Hellendoorn (NL)**

(74) Representative: **van der Veken, Johannes Adriaan, Ir. et al,**
**EXTERPATENT 3 & 4 Willem Witsenplein**
**NL-2596 BK The Hague (NL)**

(56) References cited:
**GB - A - 811 684**
**GB - A - 920 078**
**GB - A - 1 266 605**
**US - A - 3 551 242**
**US - A - 3 674 626**
**US - A - 3 793 135**

Courier Press, Leamington Spa, England

Composite unstretched thermo-deformable plastics film and deepdrawn container shaped from said plastics film.

The invention relates to a composite unstretched thermo-deformable plastics film, consisting of a polyolefin film laminated with a polyvinylidene chloride or a vinylidene chloride copolymer layer by means of an intermediate primer or adhesion layer.

Such a composite unstretched thermo-deformable plastics film consisting of a polyolefin film laminated with a polyvinylidene chloride or a vinylidene chloride copolymer by means of an intermediate primer or adhesion layer, the polyvinylidene chloride or vinylidenechloride copolymer layer having a thickness comprise between 2,5 and 50 $\mu$m, is known from FR—A—1 232 476.

Films of this type sometimes present the disadvantage of delamination during sterilization or during deepdrawing for forming a container of a desired shape.

It is now the aim of the invention to provide a composite plastics film chosen among the films as disclosed in FR—A—1 232 476 which does not present the abovementioned disadvantages.

According to the invention this aim is attained in that the polyvinylidene chloride or the vinylidene chloride copolymer layer has a thickness comprised between 5 and 7 $\mu$m and the polyolefin film a thickness comprised between 250 and 1800 $\mu$m.

Actually, the surprising fact has emerged that a composite unstretched plastics film in accordance with the present invention possesses on the one hand sufficient gas barrier properties, whilst, on the other hand, the phenomenon of delamination will not be exhibited while deforming the respective plastics film by deep-drawing or by sterilization.

It should be noted that DE—A—2 018 544 discloses a composite film comprising a polyolefin film and a layer of a vinylidene-chloride-vinylchloride copolymer having a thickness comprised between 1 and 10 $\mu$m, preferably 2 to 5 $\mu$m, the polyolefin film having a thickness of 20 $\mu$m.

This document also discloses that the impermeability of the composite film increases with increasing thickness of the vinylidene chloride-polyvinylchloride copolymer layer.

The composite film according to the invention is very suitable for packings or wrappings for spoilable products, for example food-stuffs, which products have to remain consumable for a long period of time without any preserving agents being added thereto, in view of its optimum quality, especially as regards the gas density. Actually, the aforementioned packings or wrappings should have the same beneficial properties as tins or glass jars, to wit their oxygen and/or carbondioxide permeability should be very low.

The respective polyvinylidene chloride or vinylidene chloride copolymer layer having a thickness ranging from 5 to 7 $\mu$m, can advantageously be applied in one single action, so causing the productive capacity of the relative composite unstretched thermo-deformable plastics film to be considerably accelerated.

Notwithstanding the fact that the said polyvinlyidene chloride or vinylidene chloride copolymer layer will become thinner when forming containers by deep-drawing composite unstretched plastics films of this type, the formed container obtained by deep-drawing will have sufficient gas barrier properties, so that spoilable products, for instance a.o. food-stuffs, may be safely packaged in said container, without adding any preserving agent.

The polyvinylidene chloride or vinylidene chloride copolymer layer preferably has a thickness of 6 to 6,5 $\mu$m. The thickness of the respective polyolefin film is preferably 800 $\mu$m. As a polyolefin film preferably an unstretched polypropylene film is employed, which film has preferably a thickness of 800 $\mu$m.

The composite unstretched plastics film, resulting from the use of a thickness of 6 to 6,5 $\mu$m for the respective polyvinlyidene chloride or vinylidene chloride copolymer layer and of 250 to 1800 $\mu$m for the respective polyolefin film is apt to be optimally thermo-deformable by deep drawing.

Although it is known in the art to coat polyethylene-coated paper with thin coatings of polyvinylidene chloride or vinylidene chloride copolymer, said paper materials are not subjected to deep-drawing operations.

The respective polyvinylidene chloride or vinylidene chloride copolymer layer is preferably applied by means of gravure rollers which operation is also effectively used for applying the intermediate primer or adhesion layer.

The present invention also comprises a deepdrawn container, the said container being obtained by deepdrawing a composite unstretched plastics film consisting of a polyolefin film, laminated with a polyvinylidene chloride or vinylidene chloride copolymer layer by means of an intermediate primer or adhesion layer being characterized in that the polyvinylidene chloride or the vinylidene chloride copolymer layer has a thickness comprised between 5 and 7 $\mu$m, and the polyolefin film a thickness comprised between 250 and 1800 $\mu$m.

The present invention will be illustrated by way of example only, with respect to some embodiments in the accompanying drawing, wherein:

Fig. 1 is a section through a composite film in accordance with the invention, and

Fig. 2 is a container formed by deep-drawing a composite film of the said type.

Example

A polypropylene film 1 having a thickness of 800 $\mu$m is provided with a polyurethan primer layer 2, by means of a gravure roller. If desired, said polypropylene film may be subjected to a pretreatment known per se, in order to apply the aforementioned layer.

After having completed the aforementioned operation, said gravure rollers apply a layer 3, consisting of polyvinylidene chloride or vinylidene chloride copolymer having a thickness of 6,5 $\mu$m, starting from a 90% dispersion of polyvinylidene chloride.

After having applied said polyvinylidene chloride or vinylidene chloride copolymer layer a composite film is obtained as shown in fig. 1, said film having at 20°C an oxygen permeability of 6,3 $cm^3 \cdot m^{-2} \cdot d^{-1} \cdot bar^{-1}$, the oxygen permeability of the polypropylene film proper amounting to 184 $cm^3 \cdot m^{-2} \cdot d^{-1} \cdot bar^{-1}$.

By deepdrawing said composite unstretched plastics film at a temperature of about 140°C, a shaped container (see fig. 2) is obtained which possesses excellent gas barrier properties, so that a container of this type can be used for packaging spoilable products, such as foodstuffs, without adding any preserving agents.

The oxygen permeability of a container of 400 cm having a surface of approximately 390 $cm^2$, amounts to 0,126 $cm^3 \cdot m^{-2} \cdot d^{-1} \cdot bar^{-1}$.

The obtained containers may be effectively sterilized. During a sterilization period of 30 min. at a temperature of 115°C no delamination phenomena will occur in the respective container.

The foregoing describes a polypropylene film having a thickness of 800 $\mu$m, but obviously, various film thicknesses may be employed, within the range of 250—1800 $\mu$m as claimed dependent upon the respective uses.

**Claims**

1. Composite unstretched thermo-deformable plastics film consisting of a polyolefin film (1) laminated with a polyvinylidene chloride or a vinylidene chloride copolymer layer (3) by means of an intermediate primer or adhesion layer (2) characterized in that the polyvinylidene chloride or the vinylidene chloride copolymer layer has a thickness comprised between 5 and 7 $\mu$m and the polyolefin film a thickness comprised between 250 and 1800 $\mu$m.

2. Composite unstretched thermo-deformable plastics film according to claim 1, characterized in that the said polyvinylidene chloride or vinylidene chloride copolymer layer (3) has a thickness of 6 to 6,5 $\mu$m.

3. Composite unstretched thermo-deformable plastics film according to claim 1 or 2, characterized in that the polyolefin fim (1) consists of an unstretched polypropylene film.

4. Composite unstretched thermo-deformable plastics film according to any one or more of the preceding claims, characterized in that the polyolefin film (1) consists of an unstretched polypropylene film having a thickness of 800 $\mu$m.

5. Deep-drawn shaped container, the said container being obtained by deep-drawing a composite unstretched plastics film consisting of a polyolefin film (1), laminated with a polyvinylidene chloride or vinylidene chloride copolymer layer (3) by means of an intermediate primer or adhesion layer (2), characterized in that the polyvinylidene chloride or the vinylidene chloride copolymer layer has a thickness comprised between 5 and 7 $\mu$m and the polyolefin film a thickness comprised between 250 and 1800 $\mu$m.

6. Deep-drawn shaped container according to claim 5, characterized in that the said polyvinylidene chloride or vinylidene chloride copolymer layer (3) has a thickness of 6 to 6,5 $\mu$m.

7. Deep-drawn shaped container according to claim 5 or 6, characterized in that the polyolefin film (1) consists of an unstretched polypropylene film.

8. Deep-drawn shaped container according to claims 5 to 7 characterized in that the polyolefin film (1) consists of an unstretched polypropylene film having a thickness of 800 $\mu$m.

**Revendications**

1. Film composite non étiré en matière plastique thermo-déformable consistant en un film de polyoléfine (1) statifiée avec une couche (3) de chlorure de polyvinylidène ou d'un copolymère de chlorure de vinylidène au moyen d'une couche intermédiaire (2) d'apprêt ou d'adhérence, caractérisé en ce que la couche de chlorure de polyvinylidène ou de copolymère de chlorure de vinylidène présente une épaisseur comprise entre 5 et 7 microns et en ce que le film de polyoléfine présente une épaisseur comprise entre 250 et 1800 microns.

2. Film composite non étiré en matière plastique thermo-déformable selon la revendication 1, caractérisé en ce que ladite couche (3) de chlorure de polyvinylidène ou de copolymère de chlorure de vinylidène présente une épaisseur de 6 à 6,5 microns.

3. Film composite non étiré en matière plastique thermo-déformable selon la revendication 1 ou 2, caractérisé en ce que le film de polyoléfine (1) consiste en un film non étiré de polypropylène.

4. Film composite non étiré en matière plastique thermo-déformable selon une ou plusieurs des revendications précédentes, caractérisé en ce que le film de polyoléfine (1) consiste en un film non étiré de polypropylène ayant une épaisseur de 800 microns.

5. Récipient façonné par emboutissage, ledit récipient étant obtenu en emboutissant un film composite non étiré en matière plastique qui consiste en un film de polyoléfine (1) stratifiée avec une couche (3) de chlorure de polyvinylidène ou d'un copolymère de chlorure de vinylidène au moyen d'une couche intermédiaire (2) d'apprêt ou d'adhérence, caractérisé en ce que la couche de chlorure de polyvinylidène ou de copolymère de chlorure de vinylidène présente une épaisseur comprise entre 5 et 7 microns et en ce que le film de polyoléfine présente une épaisseur comprise entre 250 à 1800 microns.

6. Récipient façonné par emboutissage selon la revendication 5, caractérisé en ce que la couche de chlorure de polyvinylidène ou de copolymère de chlorure de vinylidène (3) présente une épaisseur de 6 à 6,5 microns.

7. Récipient façonné par emboutissage selon la revendication 5 ou 6, caractérisé en ce que le film en polyoléfine (1) est un film non étiré de polypropylène.

8. Récipient façonné par emboutissage selon les revendications 5 à 7, caractérisé en ce que le film de polyoléfine (1) est un film non étiré de polypropylène ayant une épaisseur de 800 microns.

## Patentansprüche

1. Zusammengesetzte, nicht-gestreckte, heißformbare Kunststoffolie, bestehend aus einer Polyolefinfolie (1), die mittels einer zwischengeordneten Grund- oder Klebstoffschicht (2) mit einer Polyvinylidenchlorid- oder einer Vinylidenchloridcopolymerschicht (3) beschichtet ist, dadurch gekennzeichnet, daß die Polyvinylidenchlorid- oder die Vinylidenchloridcopolymerschicht eine Dicke von 5 bis 7 $\mu$m und die Polyolefinfolie eine Dicke von 250 bis 1800 $\mu$m besitzt.

2. Zusammengesetzte, nicht-gestreckte, heißformbare Kunststoffolie nach Anspruch 1, dadurch gekennzeichnet, daß die Polyvinylidenchlorid- oder Vinylidenchloridcopolymerschicht (3) eine Dicke von 6 bis 6,5 $\mu$m besitzt.

3. Zusammengesetzte, nicht-gestreckte, heißformbare Kunststoffolie nach Anspruch 1 oder 2, dadurch gekennzeichnet, daß die Polyolefinfolie (1) aus einer ungestreckten Polypropylenfolie besteht.

4. Zusammengesetzte, nicht-gestreckte, heißformbare Kunststoffolie nach einem oder mehreren der vorangehenden Ansprüche, dadurch gekennzeichnet, daß die Polyolefinfolie (1) aus einer ungestreckten Polypropylenfolie mit einer Dicke von 800 $\mu$m besteht.

5. Tiefgezogener Behälter, hergestellt durch Tiefziehen einer zusammengesetzten, nicht-gestreckten Kunststoffolie, bestehend aus einer Polyolefinfolie (1), die mittels einer zwischengeordneten Grund- oder Klebstoffschicht (2) mit einer Polyvinylidenchlorid- oder Vinylidenchloridcopolymerschicht (3) beschichtet ist, dadurch gekennzeichnet, daß die Polyvinylidenchlorid- oder die Vinylidenchloridcopolymerschicht eine Dicke von 5 bis 7 $\mu$m und die Polyolefinfolie eine Dicke von 250 bis 1800 $\mu$m besitzt.

6. Teifgezogener Behälter nach Anspruch 5, dadurch gekennzeichnet, daß die Polyvinylidenchlorid- oder Vinylidenchloridcopolymerschicht (3) eine Dicke von 6 bis 6,5 $\mu$m besitzt.

7. Tiefgezogener Behälter nach Anspruch 5 oder 6, dadurch gekennzeichnet, daß die Polyolefinfolie (1) aus einer nicht-gestreckten Polypropylenfolie besteht.

8. Tiefgezogener Behälter nach den Ansprüchen 5 bis 7, dadurch gekennzeichnet, daß die Polyolefinfolie (1) aus einer nicht-gestreckten Polypropylenfolie mit einer Dicke von 800 $\mu$m besteht.